(19) Europäisches Patentamt
European Patent Office
Office européen des brevets

(11) **EP 4 162 810 A1**

(12) **EUROPEAN PATENT APPLICATION**
published in accordance with Art. 153(4) EPC

(43) Date of publication:
**12.04.2023 Bulletin 2023/15**

(21) Application number: **21817330.0**

(22) Date of filing: **03.06.2021**

(51) International Patent Classification (IPC):
**A23L 5/00** (2016.01)    **A23G 1/44** (2006.01)
**A23G 1/46** (2006.01)

(52) Cooperative Patent Classification (CPC):
**A23G 1/44; A23G 1/46; A23L 5/00**

(86) International application number:
**PCT/JP2021/021114**

(87) International publication number:
**WO 2021/246469 (09.12.2021 Gazette 2021/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.06.2020 JP 2020096662**

(71) Applicant: **MEIJI CO., LTD**
**Chuo-ku**
**Tokyo 104-8306 (JP)**

(72) Inventors:
• **YOKOYAMA, Nanako**
**Hachioji-shi, Tokyo 192-0919 (JP)**
• **TOKUNAGA, Masamichi**
**Tokyo 104-8306 (JP)**

(74) Representative: **TBK**
**Bavariaring 4-6**
**80336 München (DE)**

(54) **OILY SOLID FOOD**

(57)    A fatty solid food, wherein protein particles with an average particle area of 250 $\mu$m$^2$ or smaller are dispersed in a fat continuous phase.

EP 4 162 810 A1

**Description**

Technical Field

The invention relates to a fatty solid food.
Specifically, the invention relates to a fatty solid food that is excellent in flavor and texture and easy-to-eat in spite of its high blend ratio of protein.

Background Art

Patent Documents 1 to 5 disclose foods with protein blended therein.
Specifically, Patent Document 1 discloses a filling-including formed food including a granular and/or flake-like filling, a protein powder attaching to the surface of the filling, and sugar solution binding components of the filling with the protein powder attaching thereto together with the protein powder, wherein the food has been formed into a predetermined shape without baking.
Patent Document 2 discloses a confectionery food containing plant protein as a main component, wherein the confectionery food contains granular soybean protein made from defatted soybean.
Patent Document 3 discloses a method for producing a cocoa-based oil-in-water suspension, the method including: providing a fat phase containing cocoa butter; providing an aqueous phase containing water, sugar or a sweetener or both sugar and a sweetener, and one or more cocoa products containing cocoa protein, starch, or a cell wall material; mixing the two phases together; and heating the two phases mixed together to form a gel network consisting of cocoa protein and/or cocoa starch components, wherein the viscosity of the suspension increases after the heating.
Patent Document 4 discloses a food containing a moisture source, partially hydrolyzed milk protein, partially hydrolyzed bean protein, untreated milk protein, and untreated bean protein.
Patent Document 5 discloses a protein-containing fatty food containing a non-fat edible material of 30 $\mu$m to I mm in particle size and having a protein content of 15% or more.

Prior Art Document

Patent Document

[Patent Document 1] JP-A-2018-82670
[Patent Document 2] JP-A-2012-249603
[Patent Document 3] JP-A-2008-522622
[Patent Document 4] JP-A-2007-267737
[Patent Document 5] WO 2007/116819

Summary of the Invention

Conventional high-protein-content products including RTE (Ready to Eat) foods such as protein bars suffer from problems of bad flavor, feeling of adhesion in the oral cavity, powderiness, and difficulty in deglutition, thus being hard to eat.
Conventional techniques including Patent Documents 1 to 5 have been found to have room for further improvement from the viewpoint of solving those problems.
One of objects of the invention is to provide a fatty solid food that is excellent in flavor and texture and easy-to-eat in spite of its high blend ratio of protein.
The invention can provide the following fatty solid foods.

1. A fatty solid food, wherein protein particles with an average particle area of 250 $\mu$m$^2$ or smaller are dispersed in a fat continuous phase.
2. The fatty solid food according to 1, wherein a fat content is 15 to 80% by mass.
3. The fatty solid food according to 1 or 2, wherein a protein content is 16.2 to 50% by mass.
4. The fatty solid food according to any one of 1 to 3, further containing an aqueous ingredient.
5. The fatty solid food according to 4, wherein a content of the aqueous ingredient is 1 to 15% by mass.
6. The fatty solid food according to any one of 1 to 5, wherein a moisture content is 0.5 to 15% by mass.
7. The fatty solid food according to any one of 1 to 6, wherein the protein particles with an average particle area of

250 $\mu$m² or smaller are dispersed in the fat continuous phase even after a lapse of 30 days at 23°C after production.
8. The fatty solid food according to any one of 1 to 7, wherein the fatty solid food is a chocolate.

The invention can provide a fatty solid food that is excellent in flavor and texture and easy-to-eat in spite of its high blend ratio of protein.

Brief Description of Drawings

[Figure 1] Figure 1 shows a result of observation of a fat continuous phase in Example 1.
[Figure 2] Figure 2 shows results of measurement of protein dispersion states in Example 1.
[Figure 3] Figure 3 shows results of measurement of protein dispersion states in Comparative Example 1.

Description of Embodiments

Hereinafter, the fatty solid food of the invention will be described in detail.
In the present specification, "x to y" is meant to indicate a numerical range of "x or more and Y or less". Upper limit and lower limit values shown in terms of numerical ranges can be arbitrarily combined.
Any mode as a combination of two or more individual modes of the invention described in the following is also a mode of the invention.

1. Fatty Solid Food

In a fatty solid food according to one aspect of the invention, protein particles with an average particle area of 250 $\mu$m² or smaller are dispersed in a fat continuous phase.
The fatty solid food according to the present aspect can provide an effect of being excellent in flavor and texture and easy-to-eat in spite of its high blend ratio of protein.
The fatty solid food according to the present aspect is a solid-state food that is readily portable and at the same time can be provided with high nutritive quality, allowing consumers with low salivary production or low masticatory force to eat it with ease.
In general, conventional high-protein-content foods, including aqueous products produced by dissolving in water for ease in drinking, protein bars having adhesive texture in the mouth, and hard products solidified with fat, are all hard to eat.
In particular, for solid-state foods, protein ingredients require large amounts of saliva in the course of eating, from chewing to deglutition, and the protein ingredients that have absorbed water are viscous; thus, solid-state foods are hard to eat. High-protein-content foods containing moisture undergo increase in hardness and viscousness in a period of storage through the process that protein ingredients absorb water and aggregate, which leads to more difficulty in chewing and deglutition. In addition, bad flavor characteristic to protein is felt.
Protein is an essential nutrient especially for elderly people with less salivary secretion and children with low masticatory force; nevertheless, it is difficult to ingest protein from an RTE food or the like.
The inventors diligently examined the aforementioned problems, and found that protein finely dispersed in foods containing fat undergoes less water absorption and/or binding of protein molecules, leading to improvement in ease in eating and storability. Especially for storability, such stably dispersed protein does not undergo water absorption and does not form a network even under long-term storage, and hence causes lower loads in chewing or deglutition.
In the following, the invention will be described by comparing with the techniques of Patent Documents 1 to 5.
In the technique of Patent Document 1, protein is dispersed in a binder solution as an aqueous phase, and hence the state is considered to be different from the dispersion state of the present aspect (the state in which protein particles are finely dispersed in a fat continuous phase).
In the technique of Patent Document 2, ingredients are mixed under heating, and hence it is not expected that the dispersion state of the present aspect (the state in which protein particles are finely dispersed in a fat continuous phase) is formed. This is obvious from the fact that mixing under cooling is needed to form the dispersion state of the present aspect.
In the technique of Patent Document 3, protein forms a gel network, and hence it is not expected that the dispersion state of the present aspect (the state in which protein particles are finely dispersed in a fat continuous phase) is formed.
The technique of Patent Document 4 provides a conventional protein bar including a core component containing partially hydrolyzed protein and non-hydrolyzed protein and a compound coating, and it is not expected that the dispersion state of the present aspect (the state in which protein particles are finely dispersed in a fat continuous phase) is formed.

In the technique of Patent Document 5, ingredients are mixed in accordance with a conventional production method without cold mixing, and hence it is not expected that the dispersion state of the present aspect (the state in which protein particles are finely dispersed in a fat continuous phase) is formed.

The form (type) of the fatty solid food according to the present aspect is not limited in any way, and can be, for example, a chocolate. The chocolate can be, but is not limited to, any of "Chocolates" in The Fair Competition Code specified by Federation of Fair Trade Conferences, and may be any product containing a cacao-derived component.

Examples of the cacao-derived component include cacao beans, cacao nib, cacao mass, cocoa butter, cocoa powder, and cocoa cake. Cacao nib is an endosperm part obtained by crushing cacao beans and removing husks and germs. Cacao mass is obtained by triturating cacao nib. Cocoa butter, cocoa powder, and cocoa cake are obtained by processing cacao mass in accordance with a conventional method.

With respect to whether a fatty solid food contains a fat continuous phase, a fatty solid food is determined to contain a fat-based continuous phase if the fatty solid food satisfies at least one of Condition A and Condition B shown below, and determined not to contain a fat-based continuous phase if the fatty solid food satisfies neither Condition A nor Condition B shown below.

(Condition A)

When a section of a fatty solid food is made with a cutter, stained with a staining solution capable of staining fat ("BODIPY (R)" manufactured by Invitrogen), and observed for the state of existence of fat through a confocal laser microscope, the fat is observed in a state in which the outer peripheries of stained parts of the fat are forming a continuous shape like an irregular cloud or network through joining.

For example, a state in which most fat is dispersed as fat droplets is determined not to satisfy Condition A.

(Condition B)

The "area fraction of fat forming a continuous phase", which is described below, is 10% or more.

A section of a fatty solid food is made with a cutter, stained with a staining solution capable of staining fat ("BODIPY (R)" manufactured by Invitrogen), and observed through a confocal laser microscope to convert the observed image (stained image) into a monochrome image in 16-bit contrast levels. Subsequently, the monochrome image is analyzed by using the image analysis software "imaged" (free software, downloadable from the following URL: https://imagej.net/Welcome) with selection of the following conditions.

Analysis method: particle analysis
Size: 200 pixel$^2$

The "area fraction" obtained from the analysis, that is, the fraction of the area of targets having an area of 200 pixel$^2$ (200 $\times$ 200 pixels) or larger (fat such that adjacent fat droplets are joining together) to the total area of the analyzed image is regarded as the "area fraction of fat forming a continuous phase".

In the present aspect, the average particle area of protein particles dispersed in a fat continuous phase is measured by using a method described in Examples.

The average particle area is needed to be 250 $\mu m^2$ or smaller, and can be, for example, 240 $\mu m^2$ or smaller, 230 $\mu m^2$ or smaller, 220 $\mu m^2$ or smaller, 210 $\mu m^2$ or smaller, 200 $\mu m^2$ or smaller, 190 $\mu m^2$ or smaller, or 180 $\mu m^2$ or smaller. The lower limit is not limited in any way, and the average particle area can be, for example, 10 $\mu m^2$ or larger, 20 $\mu m^2$ or larger, 30 $\mu m^2$ or larger, 40 $\mu m^2$ or larger, or 50 $\mu m^2$ or larger.

In an embodiment, the fatty solid food retains the state in which protein particles with an average particle area of 250 $\mu m^2$ or smaller are dispersed in a fat continuous phase even after a lapse of 30 days at normal temperature (23°C) after production.

In an embodiment, the fatty solid food contains an aqueous ingredient.

With inclusion not only of fat but also of an aqueous ingredient, the fatty solid food can promote emulsification in the mouth in chewing and achieve better melting in the mouth and ease in eating.

The aqueous ingredient will be described later in detail.

The fat content of the fatty solid food is not limited in any way, and can be, for example, 15% by mass or more, 16% by mass or more, 18% by mass or more, or 20% by mass or more, and 80% by mass or less, 70% by mass or less, 60% by mass or less, 50% by mass or less, or 40% by mass or less.

The fat content of the fatty solid food is preferably 15 to 80% by mass, more preferably 20 to 60% by mass, and further preferably 20 to 40% by mass.

The protein content of the fatty solid food is not limited in any way, and can be, for example, 16% by mass or more, 17% by mass or more, 18% by mass or more, 20% by mass or more, 22% by mass or more, or 25% by mass or more, and 50% by mass or less or 45% by mass or less.

The protein content of the fatty solid food is preferably 16.2 to 50% by mass, and more preferably 25 to 45% by mass.

If the fatty solid food contains an aqueous ingredient, the content thereof is not limited in any way, and can be, for example, 0.1% by mass or more, 0.5% by mass or more, or 1% by mass or more, and 20% by mass or less, 18% by mass or less, or 15% by mass or less.

The content of the aqueous ingredient in the fatty solid food is preferably 1 to 15% by mass.

The moisture content of the fatty solid food is not limited in any way, and the fatty solid food may be, for example, substantially free of water (in this case, water may be contained as an inevitable impurity), and the moisture content can be 0.5% by mass or more, 1% by mass or more, 2% by mass or more, or 3% by mass or more, and 15% by mass or less, 10% by mass or less, or 6% by mass or less.

Any method may be used without limitation for producing the fatty solid food according to the present aspect.

In an embodiment, the fatty solid food is obtained by mixing a fat-based ingredient and a protein ingredient under cooling (also referred to as "cold mixing").

In an embodiment, the fatty solid food is obtained by mixing a fat-based ingredient, a protein ingredient, and an aqueous ingredient under cooling.

The resulting mixture may be directly used as a fatty solid food, or formed into a fatty solid food, as necessary.

Examples of the fat-based ingredient include fat and emulsified products with a continuous phase of fat; specifically, including cocoa butter, cacao mass, nut paste, cocoa butter substitute, plant fat, shortening, and various spreads. One or more of them can be used as the fat-based ingredient.

The protein ingredient may be plant protein (from soybean, garden pea, wheat, rice, corn, etc.), animal protein (from whey, milk, casein, whole milk powder, skimmed milk powder, gelatin, eggs, collagen, insects, etc.), or a decomposition product, mixture, extract, purified product, or concentrate of any of them, or any of the ingredients as it is. It is preferable to blend the protein ingredient as a powder, and the protein ingredient may be a processed protein ingredient, for example, a puffed protein ingredient. One or more of them can be used as the protein ingredient. The grain size and viscosity of the protein ingredient are not limited.

Examples of the aqueous ingredient include water, an aqueous solution, an aqueous dispersion, an extraction liquid (the solvent for extraction may be any of water and hydrophilic solvents such as alcohols, without limitation), and a water-containing liquid; specifically, including whipped cream, bovine milk, condensed milk, juice, sugar solution, alcohol, fragrances, fruit pieces, and fruit puree. Alternatively, the aqueous ingredient may be a paste obtained by adding a solid ingredient having a characteristic of dissolving or dispersing in those aqueous ingredients to any of the aqueous ingredients. Examples of the solid ingredient include saccharides (sucrose, fructose, lactose, sugar alcohols, oligosaccharides, etc.), dietary fibers, dairy ingredients (whole milk powder, skimmed milk powder, milk protein, etc.), plant powders (fruit juice powder, vegetable powder, plant extract powder, etc.), cocoa powder, and thickeners (polysaccharide thickeners, gelatin, gummies, etc.). One or more of them can be used as the aqueous ingredient.

In addition to the above-mentioned ingredients, an additional ingredient such as dry fruits and nuts and seeds can be appropriately added to the fatty solid food of the present aspect for improvement in texture and flavor.

Two or more of the ingredients may be mixed in advance before cold mixing.

If a granular food material such as puffed protein ingredients, dry fruits, and nuts and seeds is added, a part or the whole thereof may be added to a base after cold mixing.

The order of mixing the ingredients is not limited in any way, and the ingredients may be all mixed simultaneously, or mixed in any order.

If an aqueous ingredient is used, for example, the aqueous ingredient can be added to a mixture obtained in advance by mixing a fat-based ingredient and a protein ingredient. This allows protein contained in the protein ingredient to disperse in the fat-based ingredient in a favorable manner before absorbing water derived from the aqueous ingredient.

Cold mixing may be performed under any conditions without limitation, and can be performed to allow protein particles with an average particle area of 250 $\mu$m$^2$ or smaller to be dispersed in a fat continuous phase.

Specifically, in an embodiment, the ingredients are cooled to a temperature equal to or lower than the melting point of fat (preferably, lower than the melting point) as a main component in cold mixing. If cocoa butter is used as a main component, for example, mixing is performed under cooling preferably at 30°C or lower, more preferably at 28°C or lower. With setting the temperature within such a range, finely formed protein particles can be dispersed in fat in a more satisfactory manner.

Any means may be used for cold mixing without limitation. For example, a mixing means including a cooling means can be preferably used. Examples of the cooling means include jackets. Examples of the mixing means include extruders and mixers (such as cutter mixers). If an extruder is used, operations from cold mixing to extrusion can be consecutively performed. If a mixer is used, a base after cold mixing can be formed in another step.

Unless otherwise stated, physical properties, measurements, and others shown herein are those observed in an environment at 23°C.

Examples

Hereinafter, the invention will be more specifically described with reference to Examples; however, the scope of the invention is not limited to the description in Examples. In Examples below, "%" indicates "% by mass", unless otherwise stated.

[Measurement Methods]

First, measurement methods will be described for moisture contents, fat contents, protein contents, and dispersion states of protein (average particle areas of protein particles) to be measured in Examples and Comparative Example.

(1) Moisture Content

Measurement was performed in accordance with "5. Carbohydrates, b. Moisture, (3) Vacuum Heat Drying Method" in "Annex: Analysis Methods for Nutritional Components" (https://www.caa.go.jp/policies/policy/food_labeling/food_labeling_act/pdf/food_labeling_cms101_200327_11.pdf) of "Food Labeling Standards (Consumer Affairs Agency Food Labeling Division Notification No. 139 published on March 30, 2015)", a notification relating to food labeling from Consumer Affairs Agency, Government of Japan. The specific method is as follows.
The constant weight ($W_0$ (g)) of a weighing dish (with a lid) whose bottom diameter is 50 mm is determined. Subsequently, 2 g of a sample is collected on the weighing dish, and weighed ($W_1$ (g)). Then, the weighing dish, with the lid slightly displaced, is placed in a vacuum dryer the temperature of which has been adjusted to 100°C, and the degree of vacuum is set to 25 mmHg with suction by a vacuum pump. After drying under reduced pressure for 2 hours, the vacuum pump is stopped, dehumidified air is calmly introduced into the vacuum dryer to return to normal pressure, the weighing dish is taken out and covered with the lid, and the constant weight ($W_2$ (g)) is determined. The moisture content of the sample is determined with the following formula.
Moisture content (% by mass) of sample $=\{(W_1-W_2)/(W_1-W_0)\} \times 100$

(2) Fat Content

Measurement was performed in accordance with "2. Lipids, (4) Acid Hydrolysis Method" in "Annex: Analysis Methods for Nutritional Components" mentioned above. The specific method is as follows.
A sample in an appropriate amount (1 to 2 g or less as a dry matter) is collected in a 50-mL beaker, and weighed (W (g)). Subsequently, 2 mL of ethanol (95 v/v%, special grade) is added thereto, and mixed well together with a glass rod. Then, 10 mL of hydrochloric acid (a mixture of concentrated hydrochloric acid (special grade) and ion-exchanged water at a volume ratio of 2:1) is added thereto and sufficiently mixed well together, and the resultant is covered with a watch glass and warmed on an electric thermostatic tank at 70 to 80°C for 30 to 40 minutes under intermittent stirring. After allowing to cool down, the content is transferred into an extraction tube, the beaker and the glass rod are washed with 10 mL of ethanol and further washed with 25 mL of ether (special grade), and the washings are collected in the extraction tube. The extraction tube is plugged and gently shaken for mixing well together, and the plug is slowly twisted to remove the gas of ether. The extraction tube is plugged again and vigorously shaken for mixing for 30 seconds. Then, 25 mL of petroleum ether is added thereto, and the extraction tube is vigorously shaken for mixing for 30 seconds, similarly. After leaving to stand until the upper layer becomes transparent, filtration is performed with a funnel packed with absorbent cotton. The filtrate is dried in advance with an electric constant-temperature dryer at 100 to 105°C for 1 hour, then allowed to cool down in a desiccator for 1 hour, and collected in a flask the constant weight ($W_0$ (g)) of which has been measured. To the aqueous layer in the tube, a mixed solution of 20 mL of ether and 20 mL of petroleum ether is added, the same operations as described above are performed, the resultant is then left to stand, and the ether layer is filtered and collected in a flask, similarly. Further, a mixed solution of 15 mL of ether and 15 mL of petroleum ether is added thereto, those operations are repeated once again, the tip of the extraction tube and the tips of the plug and the funnel are sufficiently washed with a mixed solution of equal amounts of ether and petroleum ether, and the washings are also collected. The flask into which the mixed solutions have been collected is connected to a rotary evaporator, warmed in an electric thermostatic tank for solvent distillation at 70 to 80°C to distill off the solvents, and the residual mixed solution is sufficiently distilled off. The outer face of the flask is wiped with gauze, and the flask is dried in an electric constant-temperature dryer at 100 to 105°C for 1 hour, then transferred into a desiccator, allowed to cool down for 1 hour, and weighed. The operations of drying, allowing to cool down, and weighing are repeated to determine the constant weight, $W_1$ (g). The lipid content (fat content) of the sample is determined with the following formula.

$$\text{Fat content (g/100 g) of sample} = \{(W_1 - W_0)/W\} \times 100$$

(3) Fat Continuous Phase

A section (thickness: approximately 100 μm) of a sample is made with a cutter. Subsequently, the section is treated with 1,2-propanediol solution of a staining solution for fat globules ("BODIPY (R)" manufactured by Invitrogen), and the state of existence of fat is observed through a confocal laser microscope. If the fat is forming a continuous phase (adjacent fat droplets are joining together), the fat is observed in a state in which the outer peripheries of stained parts of the fat are forming a continuous shape like an irregular cloud or network through joining, and thus the sample is determined to contain a fat continuous phase. If the fat is in a state in which the fat is dispersed as fat droplets and no continuous phase is formed, the sample is determined not to contain a fat continuous phase.

(4) Protein Content

Measurement was performed in accordance with "1. Proteins, (1) Nitrogen-Protein Conversion Method, 2) Combustion Method" in "Annex: Analysis Methods for Nutritional Components" mentioned above. The specific method is as follows.
A sample is weighed with precision up to 0.1 mg or less, combusted by using a total nitrogen analyzer for the combustion method, and the nitrogen content (g/100 g) of the sample is calculated from a calibration curve obtained in advance through measurement for standards for preparation of calibration curves, which have been weighed with precision up to 0.1 mg or less. The protein content of the sample is calculated with the following formula, wherein the nitrogen-protein conversion factor is 6.25.
Protein content (g/100 g) of sample = Nitrogen content (g/100 g) of sample × Nitrogen-protein conversion factor

(5) Measurement Method for Dispersion State of Protein (Average Particle Area of Protein Particles)

A section (thickness: approximately 100 μm) of a sample is made with a cutter. Subsequently, the section is subjected to protein staining (staining solution: 1,2-propanediol solution of Nile Blue A), and observed through a confocal fluorescence microscope. Then, the fluorescence microscopic image is converted into a monochrome image in 16-bit contrast levels. At that time, parts with high image lightness (protein-stained parts) are specified as a range of white parts (protein parts) to allow the fraction of the areas of the white parts in the monochrome image to be the most approximate to the fraction as the protein content determined through measurement in "(3) Protein Content" described above (contrast adjustment). Subsequently, the monochrome image is analyzed with imaged (version: 1.52e) of the image analysis software "Fiji" (free software, downloadable from the following URL: https://imagej.net/Fiji), and the average particle area of protein particles is calculated from at least three or more image analysis results.
The observation of a dispersion state is performed with excluding parts being not a continuous phase, which are unsuitable as a section for observation of a dispersion state, from targets of observation, such as outer surface parts of foods, granular food materials additionally added to foods (e.g., puffed protein ingredients, dry fruits, nuts and seeds), and large voids generated, for example, through puffing or forming of foods.

(Example 1)

A mixture of 45% of a fat-based ingredient obtained by mixing saccharide (sugar) in plant fat (cocoa butter) and 42% of a protein ingredient (whey protein concentrate powder) was introduced together with 13% of sugar solution (high-fructose corn syrup) into a twin-screw extruder, kneaded while being conveyed under cooling under operation conditions shown below so as to give a formed product with suppressed separation, and extruded to give a fatty solid food. The fat content, moisture content, and protein content of the fatty solid food obtained were 25%, 6%, and 33%, respectively. The protein ingredient had been dispersed in the fat-based ingredient before mixing with the aqueous ingredient (sugar solution).

Operation Conditions for Extruder

- Temperature of mixture of fat-based ingredient and protein ingredient (in introduction): 50°C
- Temperature of sugar solution (in introduction): 25°C
- Temperature of cooling liquid for extruder: -5°C

- Discharge temperature (surface): 15°C

The fatty solid food obtained was stored in a storage bag consisting of an aluminum-metallized film at 23°C, and after a lapse of 1 week subjected to observation of a fat continuous phase and measurement (analysis) of protein dispersion states, and three panelists specialized in chocolates carried out sensory evaluation.

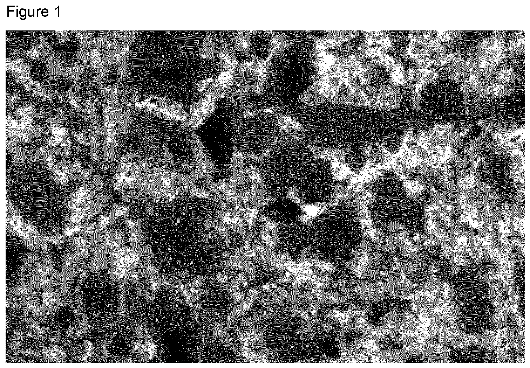

Figure 1 shows the result of observation of a fat continuous phase (microscopic image). From Figure 1, showing that the outer peripheries of stained parts of the fat were forming a continuous shape like a network through joining, it was determined that a fat continuous phase was present.

The microscopic image was analyzed for the state of the fat continuous phase by using the image analysis software "imaged" (version: 1.52e). Particle analysis was selected as the analysis method, and 200 pixel$^2$ was selected as the size. "Area fraction" given by the analysis, that is, the fraction of targets having an area of 200 pixel$^2$ or larger (fat such that adjacent fat droplets were joining together) to the total area of the analyzed image (the area fraction of fat forming a continuous phase) was 42.9%. The result that the fraction was 10% or more confirmed the presence of a fat continuous phase.

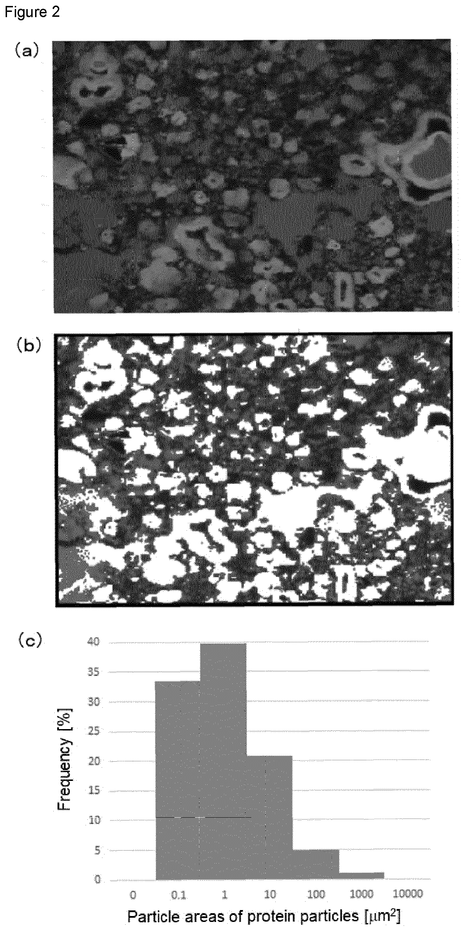

Table 1 and Figure 2 show results of measurement of protein dispersion states. Figure 2(a) shows a fluorescence microscopic image in the measurement of protein dispersion states. Figure 2(b) shows parts specified as a region of white parts (corresponding to protein parts) in the monochrome image from the fluorescence microscopic image (shown as blanks). Figure 2(c) shows the distribution of particle areas of protein particles.

(Comparative Example 1)

A fatty solid food was obtained in the same manner as in Example 1 except that the ingredients were mixed by hand at normal temperature (23°C) instead of the treatment with the extruder.

The fatty solid food obtained was stored in a storage bag consisting of an aluminum-metallized film at 23°C, and after a lapse of 1 week subjected to measurement (analysis) of protein dispersion states, and three panelists specialized in chocolates carried out sensory evaluation.

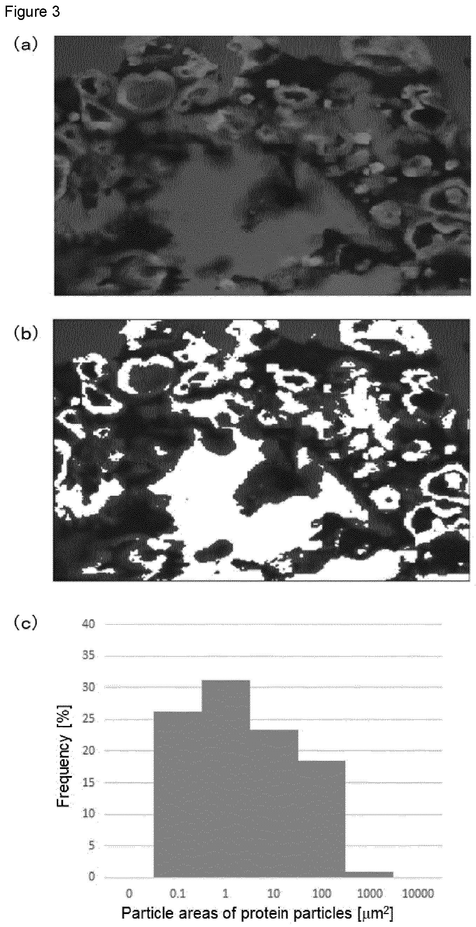

Table 1 and Figure 3 show results of measurement of protein dispersion states. Figure 3(a) shows a fluorescence microscopic image in the measurement of protein dispersion states. Figure 3(b) shows parts specified as a region of white parts (corresponding to protein parts) in the monochrome image from the fluorescence microscopic image (shown as blanks). Figure 3(c) shows the distribution of particle areas of protein particles.

[Table 1]

|  | Number of protein particles | Average particle area of protein particles [$\mu m^2$] | Area of region selected as protein parts [%] |
|---|---|---|---|
| Example 1 | 302 | 134.21 | 32.10 |
| Comparative Example 1 | 103 | 291.41 | 34.61 |
| * In Table 1, "Number of protein particles" indicates the number of protein particles counted in the observed area (the area of the fluorescence microscopic image), 96100 $\mu m^2$. | | | |

<Evaluation>

Comparison of particle areas of protein particles between the fatty solid food of Example 1 and that of Comparative Example 1 with reference to Table 1, Figure 2, and Figure 3 shows that, in spite of their identical formulations, protein particles in Example 1 were finely dispersed without binding together; and that the particle areas in Comparative Example 1 were large because of the water absorption and network formation by protein.

Also in terms of distribution of particle areas of protein particles, it is understood that the proportion of particles of small size was large in Example 1, indicating that the state of fine dispersion was maintained; and that particles of larger size were present in Comparative Example 1 because of the water absorption by protein through moisture transfer.

Further, results of the sensory evaluation showed that the fatty solid food of Example 1 had good texture, thus being easy-to-eat, was free of stickiness (viscous feeling) and chalkiness (powderiness), and gave almost no feeling of protein odor. The fatty solid food of Comparative Example 1 exhibited chalkiness (powderiness), thus being difficult to chew, and gave strong uncomfortable protein odor. Such change in flavor and texture is inferred to be due to the difference in the dispersion state of protein.

(Example 2)

Fatty solid foods were made with Formulations 1 to 4 listed in Table 2.

Specifically, a protein ingredient was mixed in a fat-based ingredient, the resultant was then introduced together with an aqueous ingredient and an accessory ingredient into a twin-screw extruder, kneaded while being conveyed under cooling under operation conditions shown below so as to give a formed product with suppressed separation, and extruded to give a fatty solid food.

Operation Conditions for Extruder

- Temperature of mixture of fat-based ingredient (fat) and protein ingredient (in introduction): 50°C
- Temperature of sugar solution (in introduction): 25°C
- Temperature of cooling liquid for extruder: -5°C
- Discharge temperature (surface): 15°C

[Table 2]

| | | Formulation 1 | Formulation 2 | Formulation 3 | Formulation 4 |
|---|---|---|---|---|---|
| Fat-based ingredient | Cocoa butter | 25.0 | | | |
| | Plant fat | | | 12.6 | 10.9 |
| | Milk chocolate | | 70.4 | 38.0 | 32.5 |
| | Cacao mass | | | 12.6 | 10.8 |
| | Sugar | 20.3 | | | |
| Protein ingredient | Whey protein concentrate powder | 41.7 | 7.4 | 21.2 | 18.2 |
| Accessory ingredient | Soybean puff | | 7.4 | 15.6 | 13.4 |
| Aqueous ingredient | High-fructose corn syrup | 13.0 | 11.3 | | 10.8 |
| | Trehalose | | 3.5 | | 3.4 |
| Total | | 100.0 | 100.0 | 100.0 | 100.0 |
| Fat content | | 25.0 | 24.0 | 29.1 | 33.9 |
| Moisture content | | 6.0 | 5.7 | 3.0 | 5.7 |
| Protein content | | 33.0 | 16.2 | 33.0 | 30.0 |
| * In Table 2, the unit of each numerical value is % by mass. | | | | | |

Although an accessory ingredient (e.g., a granular food material such as puffed protein ingredient, dry fruit, or nuts and seeds) was introduced into an extruder to mix in the base subjected to cold kneading in this Example, mixing of the accessory ingredient is not limited to this method, and a part or the whole of the accessory ingredient may be added as an ingredient before the base is subjected to cold kneading with an extruder or the like, or be added to the base during cold kneading or after cold kneading.

As a control, a fatty solid food was obtained in the same manner as for Formulation 1 except that the ingredients were mixed by hand at normal temperature (23°C) instead of the treatment with the extruder.

Immediately after production and after storage periods listed in Table 3, the fatty solid food obtained was subjected to measurement (analysis) of protein dispersion states, and three panelists specialized in chocolates carried out sensory evaluation. Table 3 shows results of the measurement of protein dispersion states.

[Table 3]

| | Storage period | Number of protein particles | Average particle area of protein particles [$\mu m^2$] | Observed area [$\mu m^2$] | Area of region selected as protein parts [%] |
|---|---|---|---|---|---|
| Formulation 1 | Immediately after production | 258 | 134.43 | 46773 | 32.24 |
| Formulation 2 | Immediately after production | 258 | 77.47 | 30851 | 17.24 |
| Formulation 2 | 1 month | 199 | 57.48 | 24250 | 16.84 |
| Formulation 3 | Immediately after production | 183 | 172.02 | 48983 | 34.02 |
| Formulation 4 | Immediately after production | 258 | 103.42 | 46050 | 31.98 |
| Formulation 3 | 1 week | 325 | 134.66 | 40283 | 27.97 |
| Formulation 4 | 1 week | 472 | 110.49 | 42887 | 29.78 |
| Formulation 1 (control) | Immediately after production | 116 | 291.40 | 45586 | 33.92 |
| Formulation 1 (control) | 1 month | 84 | 436.33 | 48723 | 32.82 |

<Evaluation>

It is understood that, in any of the fatty solid foods subjected to cold kneading, protein particles with an average particle area of 200 $\mu m^2$ or smaller were dispersed, and the stability of the dispersion state was very high even after a lapse of 1 week and of 1 month (= 30 days). Such fine dispersion is inferred to be contributing to the achievement of good melting in the mouth and good texture, in spite of the fact that the foods each had a high blend ratio of protein.

On the other hand, it is understood that, in the fatty solid food mixed by hand at normal temperature (23°C) (control), protein was already present as larger aggregates immediately after production, and absorbed water over time to give an increased average particle area; and thus that this caused the odor characteristic to protein and unfavorable texture such as stickiness (viscous feeling) and chalkiness (powderiness).

(Example 3)

In 56% of fat (milk chocolate base), 15% of a protein ingredient (whey protein concentrate powder) was mixed, the resultant was then introduced together with 14% of sugar solution (obtained by dissolving 3% of trehalose in 11% of high-fructose corn syrup) into a twin-screw extruder, and kneaded while being conveyed under cooling under operation conditions shown below so as to give a formed product with suppressed separation. Further, in the downstream side in the extruder, 15% of an accessory ingredient (soybean puff) was added, and extrusion was performed to give a fatty solid food.

Operation Conditions for Extruder

- Temperature of mixture of fat-based ingredient (fat) and protein ingredient (in introduction): 50°C
- Temperature of sugar solution (in introduction): 25°C
- Temperature of cooling liquid for extruder: -5°C
- Discharge temperature (surface): 15°C

The moisture content, fat content, and protein content of the fatty solid food obtained were 6%, 25%, and 32%, respectively. The average particle area of protein particles was 250 $\mu m^2$ or smaller.

The fatty solid food obtained, fatty solid foods obtained with Formulations 3 and 4 in Example 2 (subjected to cold kneading), and Commercially available products A to C with formulations similar to the formulations of those (controls;

all obtained by mixing a fat-based ingredient, an aqueous ingredient, and a protein ingredient, and forming the resultant) were subjected to sensory evaluation on ease in eating by three panelists specialized in chocolates, who had been trained to be capable of giving the same rating to identical samples). Specifically, five-grade evaluation (larger numerical values indicate higher levels) was performed for the four items "Weakness of protein odor", "Ease in chewing", "Ease in swallowing", and "Overall ease in eating", and the means were determined. Table 4 shows the results.

[Table 4]

|  | Weakness of protein odor | Ease in chewing | Ease in swallowing | Overall ease in eating | Protein content |
|---|---|---|---|---|---|
| Example 3 | 4.3 | 3.7 | 3.3 | 4.0 | 32% |
| Example 2-Formulation 3 | 4.3 | 4.7 | 4.3 | 4.7 | 33% |
| Example 2-Formulation 4 | 3.7 | 3.7 | 4.0 | 4.0 | 30% |
| Commercially available product A | 1.7 | 1.3 | 2.3 | 2.3 | 37% |
| Commercially available product B | 2.3 | 3.3 | 2.7 | 3.0 | 33% |
| Commercially available product C | 1.3 | 2.7 | 2.3 | 2.5 | 29% |

<Evaluation>

It is understood that the inventive articles, irrespective of their formulations, have better texture than, and are superior in ease in eating (edibility) to Commercially available products A to C.

(Example 4)

Fatty solid foods were made with Formulations 5 to 7 listed in Table 5.
Specifically, a protein ingredient was mixed in a fat-based ingredient, the resultant was then introduced together with an aqueous ingredient and an accessory ingredient into a twin-screw extruder, kneaded while being conveyed under cooling under operation conditions shown below so as to give a formed product with suppressed separation, and extruded to give a fatty solid food.

Operation Conditions for Extruder

-   Temperature of mixture of fat-based ingredient (fat) and protein ingredient (in introduction): 40°C
-   Temperature of sugar solution (in introduction): 25°C
-   Temperature of cooling liquid for extruder: -5°C
-   Discharge temperature (surface): 15°C

"Cacao composition" shown as an ingredient in Table 5 was obtained by the following method.
First, cacao beans, with pulp, taken out of cacao pods (cacao fruits) were boiled in water for 30 minutes, and drained. Subsequently, the shells were manually peeled off from the cacao beans. The cacao beans were then strained through a sieve (32 mesh, mesh size: 500 $\mu$m). Subsequently, the strained cacao beans were dried in a vacuum dryer at 98°C for 2 hours to give a powder (cacao composition).

[Table 5]

|  |  | Formulation 5 | Formulation 6 | Formulation 7 |
|---|---|---|---|---|
| Fat-based ingredient | Plant fat | 20.3 | 21.9 | 18.5 |
|  | milk chocolate | 17.9 | 17.3 | 16.3 |
|  | Cacao mass | 14.5 | 11.4 | 13.2 |

(continued)

|  | | Formulation 5 | Formulation 6 | Formulation 7 |
|---|---|---|---|---|
| Protein ingredient | Whey protein concentrate powder | | 33.8 | |
| | Soy protein concentrate powder | 30.9 | | 28.1 |
| Cacao composition | | | | 9.1 |
| Aqueous ingredient | High-fructose corn syrup | 12.5 | 11.9 | 11.3 |
| | Trehalose | 3.9 | 3.7 | 3.6 |
| Total | | 100.0 | 100.0 | 100.0 |
| Fat content | | 34.2 | 34.3 | 30.8 |
| Moisture content | | 4.7 | 4.5 | 5.2 |
| Protein content | | 30 | 28 | 30 |
| * In table 5, the unit of each numerical value is % by mass. | | | | |

As controls, fatty solid foods were obtained in the same manner as for Formulations 5 to 7 except that the ingredients were mixed by hand at normal temperature (23°C) instead of the treatment with the extruder.

Sensory Evaluation

The fatty solid foods obtained with Formulations 5 to 7 were subjected to the same sensory evaluation as described in Example 3. Table 6 shows the results.

[Table 6]

| | | Weakness of protein odor | Ease in chewing | Ease in swallowing | Overall ease in eating | Protein content |
|---|---|---|---|---|---|---|
| Formulation 5 | Example | 4.3 | 4.3 | 4.0 | 4.7 | 30% |
| | Control | 2.3 | 2.0 | 2.3 | 2.0 | 30% |
| Formulation 6 | Example | 5.0 | 4.7 | 4.7 | 5.0 | 28% |
| | Control | 2.0 | 1.7 | 2.7 | 2.2 | 28% |
| Formulation 7 | Example | 4.0 | 4.7 | 4.0 | 4.0 | 30% |
| | Control | 1.7 | 3.0 | 2.7 | 2.7 | 30% |

It is understood from Table 6 that each of the fatty solid foods of Examples, with any one of Formulations 5 to 7, has less protein odor and better texture than the comparative food having the same formulation, thus being superior in ease in eating (edibility).

The fatty solid food obtained as a control for Formulation 5 was powdery and chalky, thus having texture causing not only difficulty in chewing but also difficulty in swallowing.

The fatty solid food obtained as a control for Formulation 6 tended to adhere within the oral cavity in chewing with strong stickiness (viscous feeling), thus having texture causing difficulty in chewing.

Measurement of Protein Dispersion State

The fatty solid foods obtained with Formulations 5 and 6 were subjected to measurement (analysis) of protein dispersion states after a storage period for 1 week. Table 7 shows the results.

[Table 7]

| | | Storage period | Number of protein particles | Average particle area of protein particles [$\mu m^2$] | Observed area [$\mu m^2$] | Area of region selected as protein parts [%] |
|---|---|---|---|---|---|---|
| Formulation 5 | Example | after 1 week | 247 | 129.29 | 42364 | 27.34 |
| | Control | after 1 week | 169 | 268.32 | 48760 | 29.61 |
| Formulation 6 | Example | after 1 week | 265 | 135.73 | 42208 | 27.31 |
| | Control | after 1 week | 176 | 277.00 | 39761 | 29.92 |

It is understood from Table 7 that, in each of the fatty solid foods of Examples, with any one of Formulations 5 and 6, protein particles with an average particle area of 200 $\mu m^2$ or smaller were dispersed, indicating very high stability of the dispersion state. In each of the fatty solid foods as controls, on the other hand, protein absorbed water over time to give an increased average particle area after a lapse of 1 week, and thus protein was present as larger aggregates than in Examples. It is understood that this caused the odor characteristic to protein and unfavorable texture such as stickiness (viscous feeling) and chalkiness (powderiness).

Evaluation Using Food Physical Properties Analyzer

The fatty solid foods obtained with Formulations 5 and 6 were subjected to measurement of a physical quantity ("Sum of torques" described later) using the following food physical properties analyzer modelling the situation within the oral cavity in chewing.

[Food Physical Properties Analyzer]

The food physical properties analyzer includes: an upper jig provided with an "upper occluding part" having a shape with a semispherical convex tip; and a lower jig provided with a "lower occluding part" having a shape with a semispherical concave inner wall surface. The upper occluding part and the lower occluding part are oppositely provided to occlude each other.
The food physical properties analyzer also includes a driver unit. The driver unit drives the lower jig to achieve reciprocating linear motion in the direction allowing the upper occluding part and the lower occluding part to occlude each other. In addition, the driver unit drives the upper jig to achieve the reciprocating rotational motion of the upper jig around the direction of the reciprocating linear motion as the rotational axis.
Furthermore, the food physical properties analyzer includes a model saliva feeder unit. The model saliva feeder unit adds model saliva by flowing it between the upper occluding part and the lower occluding part at a predetermined flow rate.
A sensor is incorporated in the upper jig. The sensor measures torques (values of resistance to force applied in the direction of rotation around a rotational axis as the center) applied to the upper jig by the above-described driving.

[Measurement Conditions]

The food physical properties analyzer was driven with a fatty solid food placed between the upper occluding part and the lower occluding part, and the sum of torques [N·m] applied through 60 cycles of chewing (for 60 seconds) was measured. The same measurement was performed three times in total for each fatty solid food.
The amount of each fatty solid food used for the measurement was set to approximately 4 g. The temperature of the surfaces of the jigs to come into contact with the test samples was set to 32 to 37°C. The force to drive the lower jig along the direction of the reciprocating linear motion (occlusion force) was set to 400 N. The period of chewing (compression interval) was set to 1 cycle/sec. For the reciprocating rotational motion of the upper jig around the direction of the reciprocating linear motion as the rotational axis, the direction of rotation was reversed every compression, and the angular velocity was set to 180°/s. The flow rate of the model saliva was set to 4 mL/min. Before the measurement, 1 mL of the model saliva was added together with a fatty solid food between the upper occluding part and the lower occluding part. The model saliva used was 0.02% by mass aqueous solution of xanthan gum.

Table 8 shows the results.

[Table 8]

| | | Sum of torques [N·m] | | | |
|---|---|---|---|---|---|
| | | 1st | 2nd | 3rd | Arithmetic mean |
| Formulation 5 | Example | 67.7 | 73.4 | 68.1 | 69.7 |
| | Control | 90.9 | 82.8 | 78.3 | 84.0 |
| Formulation 6 | Example | 56.8 | 57.2 | 58.9 | 57.6 |
| | Control | 63.5 | 62.9 | 68.6 | 65.0 |

It was found from Table 8 that, for any of Formulation 5, with soy protein blended, and Formulation 6, with whey protein blended, the fatty solid food of Example gave a significantly smaller sum of torques than the control fatty solid food gave.

Torque as measured with the food physical properties analyzer used in the present measurement serves as an indicator of feeling of resistance when a food is moved by the tongue in the mouth in chewing. Typically, foods with soy protein blended therein undergo the deterioration of fluidity with addition of moisture to give larger torques. Foods with whey protein blended therein undergo increase in viscosity through water absorption to give larger torques. By contrast, the fatty solid foods of Examples were revealed to significantly suppress generation of increased torques even when being chewed with addition of water (mimic saliva). This is inferred to be the cause of good ratings for the items "Ease in swallowing", "Ease in chewing", and "Overall ease in eating" in the sensory evaluation.

Some embodiments and/or Examples of the invention have been described in detail in the above; however, those skilled in the art can readily add numerous modifications to the exemplary embodiments and/or Examples, without substantially departing from the novel teachings and advantageous effects of the invention. Accordingly, such numerous modifications are included in the scope of the invention.

The documents cited herein and the contents of an application on the basis of which the priority of the present application under the Paris Convention is claimed are totally incorporated herein.

**Claims**

1. A fatty solid food, wherein protein particles with an average particle area of 250 $\mu$m$^2$ or smaller are dispersed in a fat continuous phase.

2. The fatty solid food according to claim 1, wherein a fat content is 15 to 80% by mass.

3. The fatty solid food according to claim 1 or 2, wherein a protein content is 16.2 to 50% by mass.

4. The fatty solid food according to any one of claims 1 to 3, further comprising an aqueous ingredient.

5. The fatty solid food according to claim 4, wherein a content of the aqueous ingredient is 1 to 15% by mass.

6. The fatty solid food according to any one of claims 1 to 5, wherein a moisture content is 0.5 to 15% by mass.

7. The fatty solid food according to any one of claims 1 to 6, wherein the protein particles with an average particle area of 250 $\mu$m$^2$ or smaller are dispersed in the fat continuous phase even after a lapse of 30 days at 23°C after production.

8. The fatty solid food according to any one of claims 1 to 7, wherein the fatty solid food is a chocolate.

Figure 1

Figure 2

(a)

(b)

(c)

Figure 3

(a)

(b)

(c)

<table>
<tr><td colspan="2" align="center">**INTERNATIONAL SEARCH REPORT**</td><td>International application No.</td></tr>
<tr><td colspan="2"></td><td>PCT/JP2021/021114</td></tr>
</table>

**A. CLASSIFICATION OF SUBJECT MATTER**
Int.Cl. A23L5/00(2016.01)i, A23G1/44(2006.01)i, A23G1/46(2006.01)i
FI: A23L5/00L, A23G1/44, A23G1/46

According to International Patent Classification (IPC) or to both national classification and IPC

**B. FIELDS SEARCHED**

Minimum documentation searched (classification system followed by classification symbols)
Int.Cl. A23L5/00, A23G1/44, A23G1/46

Documentation searched other than minimum documentation to the extent that such documents are included in the fields searched
Published examined utility model applications of Japan      1922–1996
Published unexamined utility model applications of Japan    1971–2021
Registered utility model specifications of Japan            1996–2021
Published registered utility model applications of Japan    1994–2021

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| X | JP 7-041793 A (NIPPON SUISAN KAISHA LTD.) 10 February 1995 (1995-02-10), claims, paragraphs [0009], [0010], [0025], example 1 | 1–7 |
| X | WO 2015/156007 A1 (FUJI OIL HOLDINGS INC.) 15 October 2015 (2015-10-15), claims, paragraph [0023], examples | 1–8 |
| X | JP 9-009870 A (KABAYA SHOKUHIN KK) 14 January 1997 (1997-01-14), claims, examples | 1–8 |
| X | JP 64-067153 A (MITSUBISHI CHEMICAL CORPORATION) 13 March 1989 (1989-03-13), claims, examples | 1–7 |

☒  Further documents are listed in the continuation of Box C.      ☒  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 10 August 2021 | 17 August 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

| International application No. |
|---|
| PCT/JP2021/021114 |

C (Continuation). DOCUMENTS CONSIDERED TO BE RELEVANT

| Category* | Citation of document, with indication, where appropriate, of the relevant passages | Relevant to claim No. |
|---|---|---|
| X | JP 64-043150 A (MORINAGA AND CO., LTD.) 15 February 1989 (1989-02-15), claims, page 3, lower right column | 1-8 |
| P, X | WO 2020/111270 A1 (MEIJI CO., LTD.) 04 June 2020 (2020-06-04), claims, examples | 1-8 |

Form PCT/ISA/210 (second sheet) (January 2015)

| INTERNATIONAL SEARCH REPORT | International application No. |
| Information on patent family members | PCT/JP2021/021114 |

```
JP 7-041793 A      10 February 1995    (Family: none)

WO 2015/156007 A1  15 October 2015     (Family: none)

JP 9-009870 A      14 January 1997     (Family: none)

JP 64-067153 A     13 March 1989       (Family: none)

JP 64-043150 A     15 February 1989    (Family: none)

WO 2020/111270 A1  04 June 2020        (Family: none)
```

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2018082670 A
- JP 2012249603 A
- JP 2008522622 A
- JP 2007267737 A
- WO 2007116819 A

### Non-patent literature cited in the description

- 5. Carbohydrates, b. Moisture, (3) Vacuum Heat Drying Method. *Annex: Analysis Methods for Nutritional Components,* https://www.caa.go.jp/policies/policy/food_labeling/food_labeling_act/pdf/food_labeling_cms101_ 200327_11.pdf
- Food Labeling Standards (Consumer Affairs Agency Food Labeling Division. *Notification No. 139,* 30 March 2015